# EUROPEAN PATENT SPECIFICATION

(11) **EP 4 552 794 B1**
(45) Date of publication and mention of the grant of the patent: **15.10.2025**
(21) Application number: 23208409.5
(22) Date of filing: 07.11.2023
(51) Int. Cl.: B24B 13/00, B24B 41/00, B65G 29/00, B65G 35/06, B65G 37/02, B65G 47/53

(54) **COMPUTER-IMPLEMENTED METHOD FOR PROVIDING AN OCCUPATION ORDER FOR TRANSFERRING LENS BLANKS FROM A FIRST CARRIER TO A SECOND CARRIER**
COMPUTERIMPLEMENTIERTES VERFAHREN ZUR BEREITSTELLUNG EINER BESCHÄFTIGUNGSREIHENFOLGE ZUR ÜBERTRAGUNG VON LINSENROHLINGEN VON EINEM ERSTEN TRÄGER ZU EINEM ZWEITEN TRÄGER
PROCÉDÉ MIS EN OEUVRE PAR ORDINATEUR POUR FOURNIR UN ORDRE D'OCCUPATION POUR TRANSFÉRER DES ÉBAUCHES DE LENTILLE D'UN PREMIER SUPPORT À UN SECOND SUPPORT

(43) Date of publication of application: 14.05.2025
(73) Proprietor: Carl Zeiss Vision International GmbH, 73430 Aalen (DE)
(72) Inventor: KOENEN, Timo, 73447 Oberkochen (DE); RIEDEL, Linda, 73447 Oberkochen (DE); HURLER, Verena, 73447 Oberkochen (DE)
(74) Representative: Tautz & Schuhmacher

(56) References cited:
- EP-B1- 3 554 969
- WO-A1-2022/258758
- AU-A1- 2021 275 053
- CA-A1- 3 034 853
- CN-A- 109 752 864
- DE-A1- 102021 000 451
- US-A1- 2011 023 294
- US-A1- 2016 304 288

## Description

Provided is a computer-implemented method for providing an occupation order for transferring lens blanks from a first carrier to a second carrier, a data processing device, a computer program, a computer-readable storage medium, a data signal carrying the computer program, and a method for manufacturing a spectacle lens based on a lens blank. The disclosure is, thus, related to processes for manufacturing spectacle lenses.

EP 3554969 B1 relates to a production system for spectacle lenses made from spectacle lens blanks, comprising a left-hand outer transport track, multiple left-hand processing devices which are arranged on the left-hand side next to the left-hand outer transport track, a right-hand outer transport track, and a central transport track which is arranged between the left-hand outer transport track and the right-hand outer transport track, wherein the transport direction of the left-hand outer transport track and the transport direction of the right-hand outer transport track are identical, and the transport direction of the central transport track is opposite to the transport directions of the left-hand outer transport track and the right-hand outer transport track or can be reversed. Multiple right-hand processing devices are arranged on the right-hand side next to the right-hand outer transport track. A processing device pair made of left-hand and right-hand processing devices is paired with a transfer device, which comprises multiple rotational/transport devices. Each transport track comprises four respective rotational/transport devices.

US 2016/0304288 A1 is directed to a system and a method for processing of optical lenses in which the processing takes place by means of different processing apparatus between which there is a respective transfer apparatus. The transfer apparatus are used both for longitudinal and also cross conveyance. Each processing apparatus has its own conveyor apparatus which is controlled by the processing apparatus itself. The transfer apparatus are controlled by a central transfer control.

CN 109 752 864 A discloses a method for producing individual spectacle lenses according to a prescription.

Methods for manufacturing spectacle lenses typically comprise multiple manufacturing steps, which the lens blanks have to undergo until a finished spectacle lens is obtained. Different manufacturing steps may require mounting the lens blanks in different carriers, wherein the different carriers may be adapted for their use in more respective manufacturing steps. The different manufacturing steps may, for instance, include grinding, polishing, applying a hard coating by dip coating the lens blanks, applying an anti-reflective coating by depositing multiple layers in a vacuum surrounding. These different manufacturing steps require different kinds of carriers being adapted to the respective processes. Moreover, some of these manufacturing steps may differ in a batch size, i.e., in a number of lens blanks subjected to the respective manufacturing step. Some of the manufacturing steps may be specific for an individual order and only to be carried out for lens blanks associated with an individual order, which may typically comprise two lens blanks, i.e., having a batch size of two. Such individual manufacturing steps may comprise, for instance, grinding and/or polishing. Other manufacturing steps may be carried out in an identical manner for lens blanks associated with multiple different or all orders, such as applying coatings to the lens blanks. In these cases, the batch size for the respective manufacturing step may be 10 or more, optionally 20 or more, or even 100 or more.

Accordingly, there is a need to transfer lens blanks from one carrier to another carrier between different manufacturing steps. Moreover, as typically each lens blank has to be accompanied by an information sheet, also referred to as "job ticket", which identifies and specifies the related lens blank and an associated order, the job ticket has to be transferred as well.

Transferring the lens blanks from one carrier to another carrier is prone to errors, as lens blanks can be damaged or contaminated during the transferring process. Moreover, transferring the lens blanks and the job tickets bears the risks of unintentionally swapping lens blanks and losing a correct assignment of the lens blanks with the assigned job ticket identifying the respective lens blanks. These cases may result in one or more lens blanks and/or one or more orders being corrupted and/or shipped to a wrong customer. In each case, the manufacturing of one or more lens blanks may have to be repeated, which increases the reject and the manufacturing costs.

Therefore, the problem relates to providing a method which is suitable for overcoming the disadvantages of the prior art. Optionally, the problem may relate to providing a method being suitable for reducing a reject during the manufacturing process.

This problem is solved by a computer-implemented method for providing an occupation order for transferring lens blanks from a first carrier to a second carrier, a data processing device, a computer program, a computer-readable storage medium, a data signal, and a method for manufacturing a spectacle lens having the features of the respective independent claims. Optional embodiments are provided in the dependent claims and the description.

Provided is a computer-implemented method for providing an occupation order for transferring lens blanks from a first carrier to a second carrier. The method comprises receiving carrier identification information about the first carrier having a first number of slots and the second carrier having a second number of slots, wherein each of the slots is adapted to carry a lens blank. The method further comprises determining an arrangement of the first number of slots at the first carrier and an arrangement of the second number of slots at the second carrier second carrier based on the received information. Moreover, the method comprises defining an assignment of at least a part of the first number of slots of the first carrier to a corresponding number of the second number of slots of the second carrier, and providing a control signal and/or instructions for transferring multiple lens blanks from the at least the part of the first number of slots of the first carrier to the corresponding number of the second number of slots of the second carrier according to the defined assignment.

In another aspect, a data processing device comprising a processor configured to perform the method according to the disclosure is provided.

In yet another aspect, a computer program is provided, the computer program comprising instructions which, when the program is executed by a computer, cause the computer to carry out the method according to the disclosure.

In yet another aspect, a computer-readable storage medium having stored a computer program according to the disclosure is provided.

In yet another aspect, a data signal carrying a computer program according to the disclosure is provided.

In yet another aspect, a method for manufacturing a spectacle lens based on a spectacle lens blank is provided, the method comprising a computer-implemented method for providing an occupation order for transferring lens blanks from a first carrier to a second carrier according to the disclosure.

A lens blank may relate to an unprocessed precursor of a spectacle lens, such as a lens blank having an unprocessed front surface and an unprocessed back surface. The lens blank may be provided in a molding process. The lens blank may, however, also relate to a partly processed precursor of a spectacle lens. For instance, the lens blank may have a front surface which is partly or fully processed, and which may be covered with a protective foil or coating. As generally understood and defined in section 3.8.1 of ISO 13666:2019 (E), a lens blank may be a piece of optical material with one optically finished surface for the making of a lens.

As generally understood and defined in section 3.5.2 of ISO 13666:2019 (E), a spectacle lens may be an ophthalmic lens according to section 3.5.1 of ISO 13666:2019 (E) worn in front of, but not in contact with, the eyeball.

A carrier may be an element or a device for holding one or more spectacle lens products during one or more manufacturing steps. Different carriers may be adapted for a use in different manufacturing processes. A carrier may be provided as a mounting frame and may be adjusted such that at least one surface of a spectacle lens product to be coated, which is mounted in the mounting frame, may be accessible for the coating process. The mounting frame may be adjusted to contact the spectacle lens product at a peripheral edge of the spectacle lens product. The mounting frame may be adjusted, such that the mounting frame may sustain a coating process to which a mounted spectacle lens product is subjected. Moreover, the mounting frame may be reusable to sequentially mount multiple spectacle lens products to be coated. The mounting frame may be adjusted to allow reversing at least partially an alteration of the mounting frame occurring during one or more coating processes at least partially. Moreover, a carrier may be provided as a calotte shaped lens blank holder adapted to hold multiple lens blanks inside a vacuum chamber for applying an anti-reflective coating to at least one surface of the mounted lens blanks in a vaporization process. Moreover, a carrier may be provided as a box-type job carrier for receiving one or more lens blanks, which may be associated with the same order, and optionally for receiving one or more job tickets associated with the order.

A slot is a predetermined place at a carrier, which is adapted to receive a lens blank. The slot may be adapted to carry a lens blank in such a manner that a portion of the lens blank being subject of the intended manufacturing step is accessible while the lens blank is mounted at the slot of the carrier.

An arrangement of the slots at a carrier may be a distribution of the slots at the carrier. The arrangement of the slots may differ between different carriers. The arrangement of the slots at the first carrier and the second carrier may be considered when defining the assignment of at least a part of the first number of slots of the first carrier to a corresponding number of the second number of slots of the second carrier.

An occupation order is a determined order, in which the lens blanks are arranged or are to be arranged at an intended carrier. In other words, the occupation order may be regarded as an assignment plan, in which order and/or arrangement the lens blanks are to be mounted at the carrier. The assignment of the slots of the first carrier to the slots of the second carrier may correspond to the occupation order and vice versa.

Transferring the lens blank from a first carrier to a second carrier may include removing the lens blanks occupying the first carrier from their first slots at first carrier and placing them at second slots of a second carrier. The transferring process may be carried out manually and/or in a partially or fully automated manner.

The method being computer-implemented means that one, some or all method steps are carried out by a computer, such as a data processing device.

An "order" according to the disclosure may relate to job or a task for manufacturing spectacle lenses according to predetermined specifications, which may be for a specified customer.

The disclosure provides the advantage that unambiguous instructions for transferring lens blanks from a first carrier to a second carrier can be provided. Thus, the risk of occurring errors during the transfer process can be reduced. In addition, this may reduce the required time for transferring the lens blanks from the first carrier to the second carrier, which may allow reducing the reject of lens blanks and, thus, may reduce the manufacturing costs.

Moreover, the disclosure provides the advantage that the requirements for the skill set of an operator for manually transferring the lens blanks from a first carrier to a second carrier can be reduced, as the operator may receive guidance on how to carry out the transfer process. This may reduce the effort for training the operator staff handling the transfer process.

In addition, the disclosure may provide the advantage that processing a physical job ticket, i.e., for instance a job ticket based on one or more paper sheets, is no longer required. This may reduce or avoid a risk of swapping the job tickets of different lens blanks and/or orders, which may otherwise result in an unintended processing of lens blanks resulting in a reject. Consequently, the reject and the manufacturing costs may be reduced. This may further reduce or avoid a need for paper and ink, as no printed job ticket is required, and, thus, result in an ecologically more sustainable manufacturing process.

The disclosure may provide the further advantage that for each manufactured lens blanks the slots of each carrier can be precisely tracked and determined, at which the individual lens blanks have been and/or were mounted during the manufacturing process. This may provide valuable information for quality control matters, in particular to locate and/or identify possible sources for defects and/or errors possibly occurring during the manufacturing process of the lens blanks.

The received carrier identification information may include a carrier identification number of the first carrier and/or a carrier identification number of the second carrier. This may allow an automated recognition of the first and/or second carrier. Accordingly, this may facilitate determining the arrangement of the first number of slots at the first carrier and/or the second number of slots at the second carrier. Information regarding an identified carrier may be retrieved based on the identification number. Said information may be stored in a memory accessible by the computer-implemented method, such as from a local computer-readable memory connected to a data processing device carrying out said compterimplemented method and/or from a remote device, such as a server, connected to the data processing device via a compter network, such as a local area network or the internet.

The carrier identification information may be provided by a reading device adapted to read out the carrier identification number from an identification element of the first carrier and/or an identification element of the second carrier. The identification element may for instance comprise a machine-readable element, such as a bar code, a QR code and/or an RFID Tag. The reading device may be adapted to read out the respective identification element. Therefore, the reading device may comprise a camera for aquiring optical images and/or an RFID reader for extracting information from an RFID tag. The reading device may be connected to a data processing device carrying out the computer-implemented method. The reading device may be connected to the data processing device via a wire-bound connection, such as an Ethernet connection, a USB connection etc., and/or via a wireless connection, such as a Bluetooth connection, a WiFi connection, a NFC connection, a GSM connection and/or a wireless connection according to any other commonly used communication standard.

The method may further comprise retrieving process information for each lens blank occupying the first carrier, comparing the retrieved process information for each lens blank with an intended manufacturing step associated with the second carrier, and providing a notification signal, if the comparison determines a mismatch between the retrieved process information for at least one of the lens blanks occupying the first carrier and the intended manufacturing step associated with the second carrier. This may allow carrying out a background check, whether the next manufacturing step associated with the seceond carrier are intended for all lens blanks to be transferred to the second carrier. Moreover, this allows discovering possible errors in the process and/or possible swaps of lens blanks, if not all lens blanks intended for being transffered to the second carrier are to be subjected to the manufacturing step associated with the second carrier. Thus, this may allow discovering a possible error or mistake in the process in an early stage well before all manufacturing steps are completed and the finalized lens blanks or spectacle lenses made from these lens blanks are shipped to the customer. The process information for each of the lens blanks may be retrieved from a remote location, such as a server storing the information for these and possibly other lens blanks.

The method may further comprise updating the process information regarding at least the part of the first number of slots of the first carrier being assigned to the corresponding number of the second number of slots of the second carrier. In other words, the method may include adapting the process information to reflect the transferral of the lens blanks to the second carrier. This may allow keeping the process information updated and accurate during the entire manufacturing process. The updated process information may be sent to the remote location, such as a server, to be accessible by other devices related to the manufacturing and/or delivery of the lens blanks.

The method may further comprise retrieving order identification information comprising information about one or more orders, with which the one or more lens blanks occupying the first carrier are associated. The step of defining the assignment of the at least part of the first number of slots of the first carrier to the corresponding number of the second number of slots of the second carrier is carried out such that all lens blank associated with the particular order are assigned to the same second carrier. This may allow keeping track of individual orders processes in the manufacturing process. Moreover, this allows discovering possible mistakes, which may otherwise result in lens blanks associated with an individual order receiving manufacturing steps not intended for the individual order. The order information may ocomprise information about manufacturing steps planned for the respective order, such as specifications for mechanical treatments of the one or more lens blanks and/or specifications of coatings to be applied to the one or more lens blanks. Two lens blanks may be associated to each of the one or more orders.

The first number of slots of the first carrier may differ from the second number of slots from the second carrier. This may optinoally be the case if the type of the first carrier differs from the type of the second carrier, such as the first type of carrier being a frame for dip coating the lens blanks and the second type of carrier being a calotte shaped carrier for applying antri-reflective coatings to the mounted lens blanks. The assignment may be defined such that at least the part of the first number of slots of the first carrier is assigned to multiple second carriers. Alternatively, the assignment may be defined such that the first number of slots of multiple first carriers are assigned to at least a part of the second number of slots of the second carrier. In other words, the slots of the first carrier may be assigned to multiple second carriers, if the first number of slots exceeds the second number of slots of the second carrier, or vice versa. The assignment may optionally be carried out such that lens blanks of the same order are assigned to the same first and/or second carrier, instead of separating the lens blanks of the same order to separate first carriers and/or separate second carriers. This may allow reducing and/or avoiding differences in the appearance of the lens blanks of the same order.

The provided control signal may be adapted to control a system for automatedly transferring the multiple lens blanks from at least the part of the first number of slots of the first carrier to the corresponding number of the second number of slots of the second carrier according to the defined order. This may allow transfering the lens blanks from the first carrier to the second carrier in an at least partly automated manner.

Alternatively or additionally, the provided instructions may comprise a data signal for a human-machine-interface to output a visualization for instructing a human operator to transfer the multiple lens blanks according to the defined order, i.e. assignment and/or to supervise and/or to verify a correctness of a completed transfer of the multiple lens blanks according to the defined order. This may allow reducing the risk of errors during the transfer process. In particular, this may facilitate the transfer as it may assist an operator keeping the assignment of the first slots to the second slots in a predetermined order. Hence, this may reduce errors due to an at least partially arbitrarily chosen assignment by the operator. Moreover, this may reduce a required skill level and/or training level for operators to carry out the transfer of the lens blanks from the first carrier to the second carrier.

The visualization may form part of a graphical user interface for instructing a human operator to transfer the multiple lens blanks according to the defined order and/or to supervise and/or to verify a correctness of a completed transfer of the multiple lens blanks according to the defined order. Such a graphical user interface may support an operator when transferring the lens blank from a first carrier to a second carrier and/or when checking and/or monitoring a process of transferring the lens blanks from a first carrier to a second carrier.

Therefore, the disclosure further comprises a graphical user interface for a human operator to assist the human operator in carrying out and/or checking a transfer of lens blank from first slots of a first carrier to second slots of a second carrier. The graphical user interface may be provided by a computer-implemented method and visualized to the human operator via a human-machine-interface.

The graphical user interface may inlcude a visualization of the first carrier showing at least a part of the first slots of the first carrier. The graphical user interface may further inlcude a visualization of the second carrier showing at least a part of the second slots of the second carrier. Moreover, the graphical user interface may include highlighting a part of the first slots and a part of the second slots to indicate an assignment of the highlighted first slots and the highlighed second slots to each other in order to allow the human operator reckognizing an intended transfer of the lens blanks occupying the hightlighted first slots to the highlighted second slots. This highlighting may optionally comprise presenting the highlighted slots in a differnet color and/or a different brightness and/or a different contrast and/or by presenting the highlighted slots in a temporally varying color and/or a temporally varying brightness and/or a temporally varying contrast. The temporally varying appearance of the highlithed slots may result in a blinking appearance of the highlighted slots in the visualization.

Therefore, the graphical user interface may provide detailed instructions for the human operator on how to arrange the lens blanks occupying the first slots of the first carrier at the second slots of the second carrier. Thus, the graphical user interface may assist the human operator in carrying out the technical task of transferring lens blanks from a first carrier to a second carrier in a correct manner.

The following sections desribe in a non-limiting manner a method for providing an occupation order for transferring lens blanks from a first carrier to a second carrier, wherein the disclosure is not limited to the described method.

In a first step, a second carrier to be used for an intended manufacturing step is placed at a defined position, wherein the defined position may be a predetermined position relative to an autmated processing device.

In a second step, an identification element of the second carrier, such as a bar code, QR code and/or RFID tag, is read out and identification information about the second carrier is extracted from the identification element.

In a third step, the first carrier is visualized, wherein all slots of the first carrier are visulaized. The visualization may provide information about slots possibly occupied with lens blanks.

In a fourth step, a first carrier used in a previous manufacturing step is placed at a defined position, wherein the defined position may be a predetermined position relative to an automated processing device.

In a fifth step, an identification element of the first carrier is read out and identification information about the first carrier is extracted.

In a sixth step, process information about the lens blanks to be transferred from the first carrier to the second carrier is retrieved and checked. If the process information of at least one of the lens blanks to be transferred does not match the intended manufacturing step, a respective notification is provided.

In a seventh step, an assignment of at least a part of the first number of slots of the first carrier to a corresponding number of the second number of slots of the second carrier is defined, and instructions to transfer the respective lens blanks according to the defined assignment are provided. A control signal for an automated transfer device and/or for a human-machine-interface to visualize respective instructions for a human operator is provided.

In an eighth step, the automated transfer device and/or the human operator transfers the lens blanks from the first carrier to the second carrier according to the defined assignment until all lens blanks are removed from the first carrier or until all slots of the second carrier are occupied. In the latter case, the remaining lens blanks may be transferred to a further second carrier.

In a ninth step, a status of the first carrier is set to "empty".

In a tenth step, possibly remaining unoccupied slots at the second carrier are determined. If unoccupied slots are available, the fourth to eight steps and possibly the tenth step is repeated.

When this process is completed, the exact information, which lens blanks occupies which slot at the second carrier, is available and can be stored with reference to the second carrier. Moreover, process information for each transferred lens blank may be updated. The second carrier and the lens blanks occupying the second carrier are now ready for the intended manufacturing step. After completing carrying out the intended manufacturing step using the second carrier, the lens blanks occupying the second carrier may be removed and the process may be repeated starting with the first step.

This process and in general all processes disclosed herein may be carried out such that the occupation order of the lens blanks at the different carriers is maintained. This may facilitate an identification of the individual lens blanks and their correct assignment to the respective orders.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures for illustrating the disclosire without limiting the disclosure to the described embodiments.

Optional embodiments of the disclosure will be illustrated in the following with reference to the drawings. The Figures show:
- Figure 1: a schematic illustration of a transfer process of lens blanks from a first carrier to a second carrier;
- Figure 2: a computer-implemented method according to an optional embodiment for providing an occupation order;
- Figure 3: a method according to an optional embodiment for manufacturing lens blanks;
- Figure 4: a method according to an optional embodiment for manufacturing lens blanks;
- Figures 5A and 5B: exemplary visualizations of instructions for an operator for transferring multiple lens blanks.

In the drawings the same reference signs are used for corresponding or similar features in different drawings.

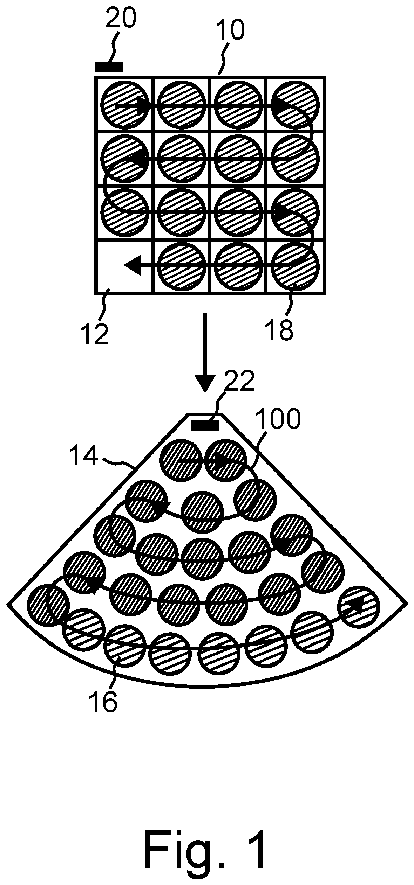

Figure 1 schematically depicts a first carrier 10 having a first number of slots 12 and a second carrier 14 having a second number of slots 16, wherein each of the slots 12, 16 is adapted to carry a lens blank 18 during a manufacturing step of a manufacturing process for manufacturing lens blanks 18. Between consecutive manufacturing steps, it may be required to transfer at least some of the lens blanks 18 form the first carrier 10 to the second carrier 14 according to a defined occupation order 100. According to the presented embodiment, the first carrier 10 may be a carrier for curing the lens blanks 18 after a dip coating manufacturing step. The second carrier 14 according to this exemplary embodiment may be a calotte-shaped carrier for supporting the lens blanks 18 during a coating step for applying an anti-reflective coating. The first carrier 10 comprises an identification element 20 providing identification information to identify the first carrier 10. The second carrier 14 comprises an identification element 22 providing identification information to identify the second carrier 14.

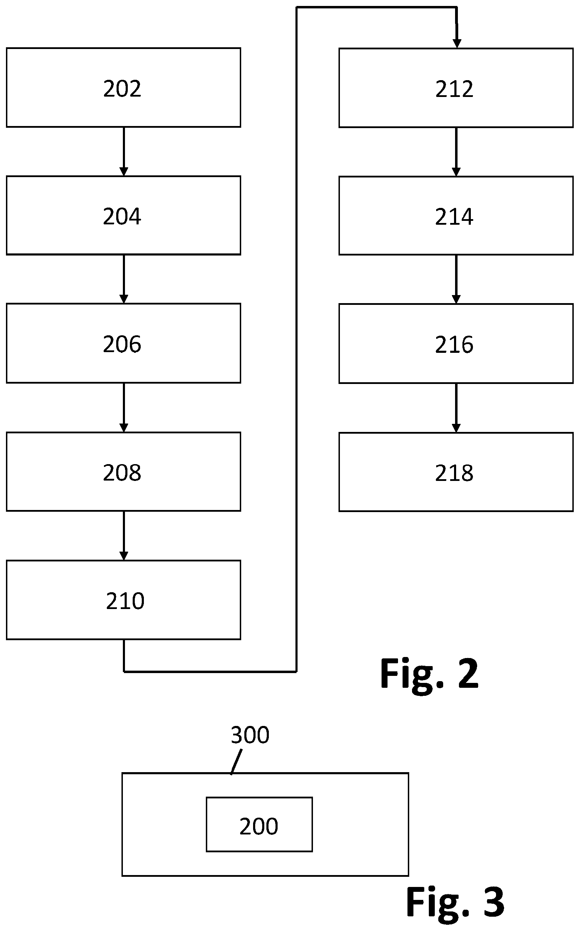

Figure 2 schematically illustrates a computer-implemented method 200 according to an optional embodiment for providing an occupation order 100 for transferring lens blanks 18 from a first carrier 10 to a second carrier 14.The method 200 comprises in a step 202 of receiving carrier identification information about the first carrier 10 having a first number of slots 12 and the second carrier 14 having a second number 16 of slots, wherein each of the slots 12, 16 is adapted to carry a lens blank 18. The received carrier identification information may include a carrier identification number of the first carrier 10 and/or a carrier identification number of the second carrier 14. The carrier identification information may be provided by a reading device adapted to read out the carrier identification number from an identification element 20 of the first carrier 10 and/or an identification element 22 of the second carrier 14.

In a step 204 the method 200 comprises determining an arrangement of the first number of slots 12 at the first carrier 10 and an arrangement of the second number of slots 16 at the second carrier 14 based on the received information.

In a step 206 the method 200 comprises defining an assignment of at least a part of the first number of slots 12 of the first carrier 10 to a corresponding number of the second number 16 of slots of the second carrier 14.

In a step 208 the method 200 comprises providing a control signal and/or instructions for transferring multiple lens blanks 18 from at least the part of the first number of slots 12 of the first carrier 10 to the corresponding number of the second number of slots 16 of the second carrier 14 according to the defined order 100.

The method 200 may further comprise a step 210 of retrieving process information for each lens blank 18 occupying the first carrier 10.

Moreover, the method 200 may comprise a step 212 of comparing the retrieved process information for each lens blank 18 with an intended manufacturing step associated with the second carrier 14.

The method 200 may further comprise a step 214 of providing a notification signal if the comparison determines a mismatch between the retrieved process information for at least one of the lens blanks 18 occupying the first carrier 10 and the intended manufacturing step associated with the second carrier 14. The steps 210 to 214 may be carried out prior to or during carrying out one or more of the method steps 202 to 208.

The method 200 may further comprise a step 216 of updating the process information regarding at least the part of the first number of slots 12 of the first carrier 10 and/or the lens blanks located in said slots 12 being assigned to the corresponding number of the second number of slots of the second carrier.

The method 200 may further comprise a step of 218 of retrieving order identification information comprising information about one or more orders, with which the one or more lens blanks occupying the first carrier are associated. Defining 206 of the assignment of the at least part of the first number of slots 12 of the first carrier 10 to the corresponding number of the second number of slots 16 of the second carrier 14 is carried out such that all lens blanks 18 associated with a particular order are assigned to the same second carrier 14. Optionally two lens blanks are associated to each of the one or more orders.

The first number of slots 12 of the first carrier 10 may differ from the second number of slots 16 from the second carrier14. The assignment may be defined such that at least the part of the first number of slots 12 of the first carrier 10 is assigned to multiple second carriers 14. Alternatively, the assignment may be defined such that the first number of slots 12 of multiple first carriers 10 are assigned to at least a part of the second slots 16 of the second carrier 14.

The provided control signal may be adapted to control a system for automatedly transferring the multiple lens blanks 18 from the at least part of the first number of slots 12 of the first carrier 10 to the corresponding number of the second number of slots 16 of the second carrier 14 according to the defined order.

The provided instructions may comprise a data signal for a human-machine-interface to output a visualization for instructing a human operator to transfer the multiple lens blanks 18 according to the defined order 100 and/or to supervise and/or to verify a correctness of a completed transfer of the multiple lens blanks 18 according to the defined order 100.

The visualization may form part of a graphical user interface for instructing a human operator to transfer the multiple lens blanks 18 according to the defined order 100 and/or to supervise and/or to verify a correctness of a completed transfer of the multiple lens blanks 18 according to the defined order 100.

The method 200 may form part of a method 300 for manufacturing a spectacle lens 18 based on a spectacle lens blank 18. Figure 3 schematically illustrates a method 300 comprising a computer-implemented method 200 for providing an occupation order for transferring lens blanks from a first carrier to a second carrier according to the method described with reference to Figure 2.

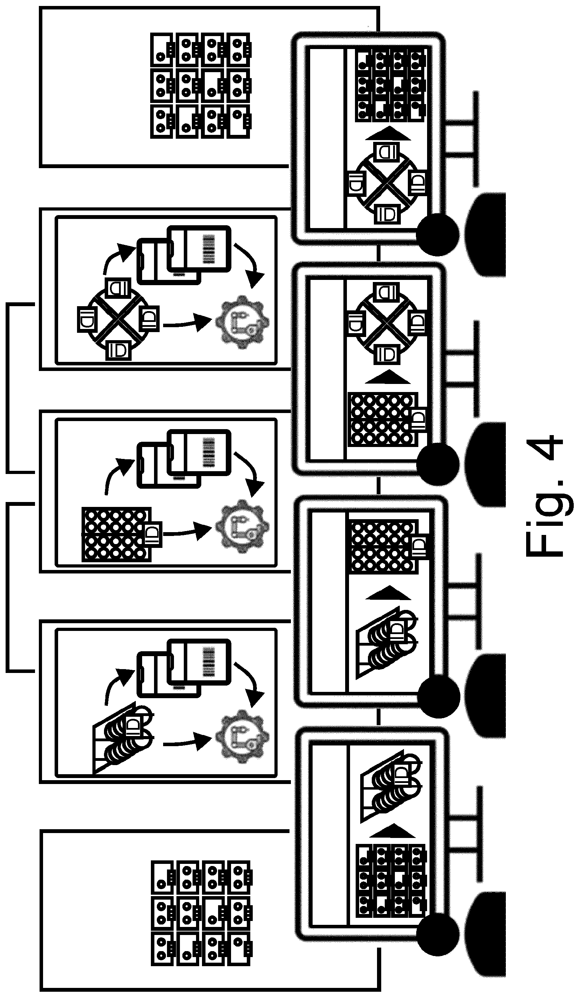

With reference to Figure 4, a method according to an optional embodiment for manufacturing lens blanks 18 is exemplarily described, without limiting the disclosure.

The method according to the example comprises the manufacturing steps (from left to right) of providing the lens blanks before coating, hard coating the lens blanks, curing the hard coated lens blanks, applying an anti-reflective (AR) coating to the lens blanks, and providing the finished lens blanks. In general, the finished lens blanks may be regarded as finished spectacle lens products. Between hard coating and curing and between curing and AR coating, respectively, an inspection of the lens blanks may be carried out.

Between the manufacturing steps, the lens blanks are transferred between different carriers. Before the coating, two lens blanks associated with the same order may be placed in a box-type job carrier, wherein only two lens blanks may fit into said job carrier. For hard coating the lens blanks via dip coating, a frame-type carrier may be used allowing a batch processing of lens blanks of multiple orders. For transferring the lens blanks from the box-type carriers to the frame-type carrier, an occupation order may be provided according to a method according to the disclosure. Instructions may be provided to an operator, which may be visualized to the operator via a human-machine-interface, to provide instructions for the operator on the defined order, according to which the lens blanks have to be transferred from multiple box-type carriers (first carriers) to the frame-type carrier (second carrier). During this process, the identification information of the first and second carrier(s) extracted from respective identification elements may be received and used to provide the occupation order. Moreover, process information for the multiple transferred lens blanks may be updated.

Between the hard coating manufacturing step and the curing manufacturing step, the lens blanks may be transferred from the frame-type carrier to a carrier suitable for curing the hard coated lens blanks. Also, in this transfer process a method for providing an occupation order according to the disclosure may be used and respective instructions may be provided to the operator via a human-machine-interface. The curing process may be a batch process, to which all lens blanks during the manufacturing process are subjected. Accordingly, the carrier suitable for curing the hard coated lenses may be provided as a carrier suitable to receive more than two lens blanks of different orders. During this process, the identification information of the first and second carrier(s) extracted from respective identification elements may be received and used to provide the occupation order. Moreover, process information for the multiple transferred lens blanks may be updated.

Likewise, between the curing manufacturing step and the AR coating manufacturing step, the lens blanks may be transferred from the carrier for curing to a calotte-shaped carrier suitable for applying an AR coating to the lens blanks. The calotte shaped carrier may be suitable to be placed in a vacuum chamber and to carry the lens blanks such that at least one optical surface of the lens blanks may be exposed to an evaporation process to apply the AR coating. Also in this transfer process, a method for providing an occupation order according to the disclosure may be used and respective instructions may be provided to the operator via a human-machine-interface. The AR coating process may be a batch process, to which all or many lens blanks during the manufacturing process are subjected. Accordingly, the calotte-shaped carrier for AR coating the hard coated lenses may be provided as a carrier suitable to receive more than two lens blanks of different orders. During this process, the identification information of the first and second carrier(s) extracted from respective identification elements may be received and used to provide the occupation order. Moreover, process information for the multiple transferred lens blanks may be updated.

After finishing the AR coating process, the lens blanks may be removed from the calotte-shaped carrier and may be placed back into the box-type job carrier, wherein in each box-type job carrier solely lens blanks associated with one specific order may be placed. During this process, the identification information of the first and second carrier(s) extracted from respective identification elements may be received and used to provide the occupation order. Moreover, process information for the multiple transferred lens blanks may be updated.

The method and the system may be adaptable to different types and/or capacities of the used carriers, i.e., how many slots are available in the used carriers and/or how the slots are arranged at the respective carrier. The used carriers and/or the applied manufacturing steps may vary between different manufacturing plants, for which the method may be adapted and individualized.

For each carrier, a specific slot may be determined for a test lens blank, which may not be associated with a particular order but may be processed for monitoring and/or test purposes.

The visualizations may optionally be provided for the operator for such transfer processes, in which the batch size changes, i.e., for which the number of slots of the second carrier differs from the number of slots of the first carrier. This may reduce a risk of erroneously changing an occupation order during the transfer process. However, according to some embodiments an occupation order may be provided for each transfer during the manufacturing process.

The visualization for the operator may be provided via a display, wherein the display may comprise a touchscreen. The touch screen may allow the operator to enter one or more commands, which may then be used for adapting the visualization and/or the process of providing the occupation order. For instance, the operator may identify defective lens blanks to the system via providing a respective input. This information may be used to use an empty slot for occupying it with a different lens blank after removing the defective lens blank.

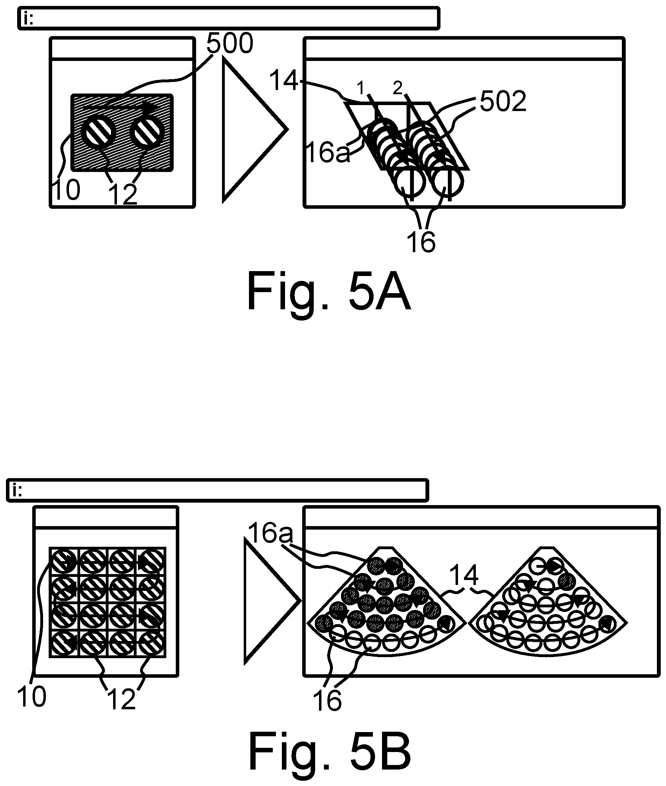

Figures 5A and 5B exemplarily show a visualization of instructions for an operator for transferring multiple lens blanks from first slots 12 of a first carrier to second slots 16 of a second carrier 14. In Figure 5A, the first carrier is a job carrier comprising two first slots 12. The second carrier 14 is a frame-type carrier for hard coating the mounted spectacle lenses, wherein the frame type carrier is a batch carrier for receiving lens blanks 18 of multiple orders. The visualization may highlight the first slots 12 and respective second slots 16a, to which the lens blanks occupying the highlighted first slots 12 are to be transferred. Markers, such as the arrows 500 and 502 may indicate, in which order the lens blanks are to be taken from the highlighted first slots and placed at the highlighted second slots 16a. This may reduce a risk of erroneously misplacing the lens blank to wrong slots 16 of the second carrier 14.

Figure 5B depicts an exemplary visualization of instructions for an operator for transferring multiple lens blanks from first slots 12 of a first carrier 10 being a carrier for curing lens blanks to second slots 16 of a second carrier 14 being a calotte-shaped carrier for AR coating. The visualization indicates the first slots 12 and second sots 16 and depicts an occupation order 100, according to which the lens blanks from first slots 12 of the first carrier 10 are to be placed at the second slots 16 of the second carrier 14. The visualization may further indicate possible free slots at the second carrier 14, which are not occupied after transferring all lens blanks 18 from the first carrier 10 to the second carrier 14. In the example of Figure 5B, two second carriers 14 are shown. This may be advantageous, if transferring the lens blanks occupying the first carrier 10 requires distributing the lens blanks to two or more second carriers 14.

### List of reference signs

- 10: first carrier
- 12: slot of first carrier
- 14: second carrier
- 16: slot of second carrier
- 16a: highlighted second slot
- 18: lens blank
- 20: identification element of first carrier
- 22: identification element of second carrier

- 100: occupation order
- 200: method for providing an occupation order for transferring lens blanks from a first carrier to a second carrier
- 202 - 218: method steps
- 300: method for manufacturing lens blanks

- 500, 502: arrows

## Claims

1. Computer-implemented method (200) for providing an occupation order (100) for transferring lens blanks (18) from a first carrier (10) to a second carrier (14), **characterized in that** the method (200) comprises:
- receiving (202) carrier identification information about the first carrier (10) having a first number of slots (12) and the second carrier (14) having a second number of slots (16), wherein each of the slots (14) is adapted to carry a lens blank (18);
- determining (204) an arrangement of the first number of slots (12) at the first carrier (10) and an arrangement of the second number of slots (16) at the second carrier (14) based on the received information;
- defining (206) an assignment of at least a part of the first number of slots (12) of the first carrier (10) to a corresponding number of the second number of slots (16) of the second carrier (14); and
- providing (208) a control signal and/or instructions for transferring multiple lens blanks (18) from at least the part of the first number of slots (12) of the first carrier (10) to the corresponding number of the second number (16) of slots of the second carrier (14) according to the defined assignment.

2. Method (200) according to claim 1, wherein the received carrier identification information includes a carrier identification number of the first carrier (10) and/or a carrier identification number of the second carrier (14).

3. Method (200) according to claim 2, wherein the carrier identification information is provided by a reading device adapted to read out the carrier identification number from an identification element (20) of the first carrier (10) and/or an identification element (22) of the second carrier (14).

4. Method (200) according to any one of the preceding claims, further comprising:
- retrieving (210) process information for each lens blank (18) occupying the first carrier (10);
- comparing (212) the retrieved process information for each lens blank (10) with an intended manufacturing step associated with the second carrier (14); and
- providing (214) a notification signal if the comparison determines a mismatch between the retrieved process information for at least one of the lens blanks (18) occupying the first carrier (10) and the intended manufacturing step associated with the second carrier (14).

5. Method (200) according to claim 4, further comprising updating (216) the process information regarding at least the part of the first number of slots (12) of the first carrier (10) being assigned to the corresponding number of the second number of slots (16) of the second carrier (14).

6. Method (200) according to any one of the preceding claims, further comprising:
- retrieving (218) order identification information comprising information about one or more orders, with which the one or more lens blanks (18) occupying the first carrier (10) are associated;
- wherein the defining of the assignment of the at least part of the first number of slots (12) of the first carrier to the corresponding number of the second number of slots of the second carrier is carried out such that all lens blank associated with the a particular order are assigned to the same second carrier.

7. Method (200) according to any one of the preceding claims, wherein two lens blanks (18) are associated to each of the one or more orders.

8. Method (200) according to any one of the preceding claims, wherein the first number of slots (12) of the first carrier (10) differs from the second number of slots (16) from the second carrier (14), and
wherein the assignment is defined such that at least the part of the first number of slots (12) of the first carrier (10) is assigned to multiple second carriers (14); or wherein the assignment is defined such that the first number of slots of multiple first carriers are assigned to at least a part of the second slots of the second carrier.

9. Method (200) according to any one of the preceding claims, wherein the provided control signal is adapted to control a system for automatedly transferring the multiple lens blanks (18) from the at least part of the first number of slots (12) of the first carrier (10) to the corresponding number of the second number of slots (16) of the second carrier (14) according to the defined order.

10. Method (200) according to any one of the preceding claims, wherein the provided instructions comprise a data signal for a human-machine-interface to output a visualization for instructing a human operator to transfer the multiple lens blanks (18) according to the defined order and/or to supervise and/or to verify a correctness of a completed transfer of the multiple lens blanks (18) according to the defined order.

11. Method (200) according to claim 10, wherein the visualization forms part of a graphical user interface for instructing a human operator to transfer the multiple lens blanks (18) according to the defined order and/or to supervise and/or to verify a correctness of a completed transfer of the multiple lens blanks (18) according to the defined assignment.

12. Data processing device comprising a processor configured to perform the method (200) according to any of the preceding claims.

13. Computer program comprising instructions which, when the program is executed by a computer, cause the computer to carry out the method (200) according to any of claims 1 to 11.

14. Data signal carrying the computer program of claim 13.

15. Method (300) for manufacturing a spectacle lens based on a spectacle lens blank (18), the method (300) comprising a computer-implemented method (200) for providing an occupation order for transferring lens blanks from a first carrier (10) to a second carrier (14) according to any one of claims 1 to 11.

## Patentansprüche

1. Computerimplementiertes Verfahren (200) zum Bereitstellen einer Belegungsreihenfolge (100) zum Übertragen von Linsenrohlingen (18) von einem ersten Träger (10) zu einem zweiten Träger (14), **dadurch gekennzeichnet, dass** das Verfahren (200) umfasst:
- Empfangen (202) von Trägeridentifizierungsinformationen über den ersten Träger (10) mit einer ersten Anzahl von Aufnahmeplätzen (12) und den zweiten Träger (14) mit einer zweiten Anzahl von Aufnahmeplätzen (16), wobei jeder der Aufnahmeplätze (14) angepasst ist, einen Linsenrohling (18) zu tragen;
- Bestimmen (204) einer Anordnung der ersten Anzahl von Aufnahmeplätzen (12) an dem ersten Träger (10) und einer Anordnung der zweiten Anzahl von Aufnahmeplätzen (16) an dem zweiten Träger (14) basierend auf den empfangenen Informationen;
- Definieren (206) einer Zuordnung mindestens eines Teil der ersten Anzahl von Aufnahmeplätzen (12) des ersten Trägers (10) zu einer korrespondierenden Anzahl der zweiten Anzahl von Aufnahmeplätzen (16) des zweiten Trägers (14); und
- Bereitstellen (208) eines Steuersignals und/oder von Anweisungen zum Übertragen mehrerer Linsenrohlinge (18) von mindestens dem Teil der ersten Anzahl von Aufnahmeplätzen (12) des ersten Trägers (10) zu der korrespondierenden Anzahl der zweiten Anzahl (16) von Aufnahmeplätzen des zweiten Trägers (14) gemäß der definierten Zuordnung.

2. Verfahren (200) nach Anspruch 1, wobei die empfangenen Trägeridentifizierungsinformationen eine Trägeridentifizierungsnummer des ersten Trägers (10) und/oder eine Trägeridentifizierungsnummer des zweiten Trägers (14) enthalten.

3. Verfahren (200) nach Anspruch 2, wobei die Trägeridentifizierungsinformationen durch eine Lesevorrichtung, die angepasst ist, die Trägeridentifizierungsnummer von einem Identifizierungselement (20) des ersten Trägers (10) und/oder einem Identifizierungselement (22) des zweiten Trägers (14) auszulesen, bereitgestellt werden.

4. Verfahren (200) nach einem der vorhergehenden Ansprüche, ferner umfassend:
- Abrufen (210) von Prozessinformationen für jeden Linsenrohling (18), der den ersten Träger (10) belegt;
- Vergleichen (212) der abgerufenen Prozessinformationen für jeden Linsenrohling (10) mit einem vorgesehenen Fertigungsschritt, der mit dem zweiten Träger (14) assoziiert ist; und
- Bereitstellen (214) eines Benachrichtigungssignals, wenn der Vergleich eine Nichtübereinstimmung zwischen den abgerufenen Prozessinformationen für mindestens einen der Linsenrohlinge (18), der den ersten Träger (10) belegt, und dem vorgesehenen Fertigungsschritt, der mit dem zweiten Träger (14) assoziiert ist, bestimmt.

5. Verfahren (200) nach Anspruch 4, ferner umfassend Aktualisieren (216) der Prozessinformationen bezüglich mindestens dem Teil der ersten Anzahl von Aufnahmeplätzen (12) des ersten Trägers (10), die der korrespondierenden Anzahl der zweiten Anzahl von Aufnahmeplätzen (16) des zweiten Trägers (14) zugeordnet sind.

6. Verfahren (200) nach einem der vorhergehenden Ansprüche, ferner umfassend:
- Abrufen (218) von Bestellungs-Identifizierungsinformationen, umfassend Informationen über eine oder mehrere Bestellungen, mit denen der eine oder die mehreren Linsenrohlinge (18), die den ersten Träger (10) belegen, assoziiert sind;
- wobei das Definieren der Zuordnung des mindestens Teils der ersten Anzahl von Aufnahmeplätzen (12) des ersten Trägers zu der korrespondierenden Anzahl der zweiten Anzahl von Aufnahmeplätzen des zweiten Trägers derart ausgeführt wird, dass alle Linsenrohling, die mit der einen besonderen Bestellung assoziiert sind, demselben zweiten Träger zugeordnet werden.

7. Verfahren (200) nach einem der vorhergehenden Ansprüche, wobei zwei Linsenrohlinge (18) mit jeder der einen oder mehreren Bestellungen assoziiert werden.

8. Verfahren (200) nach einem der vorhergehenden Ansprüche, wobei die erste Anzahl von Aufnahmeplätzen (12) des ersten Trägers (10) von der zweiten Anzahl von Aufnahmeplätzen (16) von dem zweiten Träger (14) verschieden ist, und
wobei die Zuordnung derart definiert ist, dass mindestens der Teil der ersten Anzahl von Aufnahmeplätzen (12) des ersten Trägers (10) mehreren zweiten Trägern (14) zugeordnet ist; oder wobei die Zuordnung derart definiert ist, dass die erste Anzahl von Aufnahmeplätzen von mehreren ersten Trägern mindestens einem Teil der zweiten Aufnahmeplätze des zweiten Trägers zugeordnet ist.

9. Verfahren (200) nach einem der vorhergehenden Ansprüche, wobei das bereitgestellte Steuersignal angepasst ist, ein System für automatisiertes Übertragen der mehreren Linsenrohlinge (18) von dem mindestens Teil der ersten Anzahl von Aufnahmeplätzen (12) des ersten Trägers (10) zu der korrespondierenden Anzahl der zweiten Anzahl von Aufnahmeplätzen (16) des zweiten Trägers (14) gemäß der definierten Reihenfolge zu steuern.

10. Verfahren (200) nach einem der vorhergehenden Ansprüche, wobei die bereitgestellten Anweisungen ein Datensignal für eine Mensch-Maschinen-Schnittstelle zum Ausgeben einer Visualisierung umfassen, um einen menschlichen Bediener anzuweisen, die mehreren Linsenrohlinge (18) gemäß der definierten Reihenfolge zu übertragen und/oder eine Richtigkeit einer abgeschlossenen Übertragung der mehreren Linsenrohlinge (18) gemäß der definierten Reihenfolge zu überwachen und/oder zu verifizieren.

11. Verfahren (200) nach Anspruch 10, wobei die Visualisierung einen Teil einer grafischen Benutzerschnittstelle bildet, um einen menschlichen Bediener anzuweisen, die mehreren Linsenrohlinge (18) gemäß der definierten Reihenfolge zu übertragen und/oder eine Richtigkeit einer abgeschlossenen Übertragung der mehreren Linsenrohlinge (18) gemäß der definierten Zuordnung zu überwachen und/oder zu verifizieren.

12. Datenverarbeitungsvorrichtung, umfassend einen Prozessor, der konfiguriert ist, das Verfahren (200) nach einem der vorhergehenden Ansprüche durchzuführen.

13. Computerprogramm, umfassend Anweisungen, die, wenn das Programm durch einen Computer ausgeführt wird, den Computer veranlassen, das Verfahren (200) nach einem der Ansprüche 1 bis 11 auszuführen.

14. Datasignal, das das Computerprogramm nach Anspruch 13 trägt.

15. Verfahren (300) zum Herstellen einer Brillenglaslinse basierend auf einem Brillenglaslinsenrohling (18), das Verfahren (300) umfassend ein computerimplementiertes Verfahren (200) zum Bereitstellen einer Belegungsreihenfolge zum Übertragen von Linsenrohlingen von einem ersten Träger (10) zu einem zweiten Träger (14) nach einem der Ansprüche 1 bis 11.

## Revendications

1. Procédé mis en œuvre par ordinateur (200) pour fournir un ordre d'occupation (100) pour transférer des ébauches de verres (18) depuis un premier support (10) à un second support (14), **caractérisé en ce que** le procédé (200) comprend :
- la réception (202) d'informations d'identification de support concernant le premier support (10) ayant un premier nombre de cavités (12) et le second support (14) ayant un second nombre de cavités (16), dans lequel chacune des cavités (14) est adaptée pour supporter une ébauche de verre (18) ;
- la détermination (204) d'un agencement du premier nombre de cavités (12) sur le premier support (10) et d'un agencement du second nombre de cavités (16) sur le second support (14) sur la base des informations reçues ;
- la définition (206) d'une attribution d'au moins une partie du premier nombre de cavités (12) du premier support (10) à un nombre correspondant du second nombre de cavités (16) du second support (14) ; et
- la fourniture (208) d'un signal de commande et/ou d'instructions pour transférer de multiples ébauches de verres (18) depuis au moins la partie du premier nombre de cavités (12) du premier support (10) au nombre correspondant du second nombre (16) de cavités du second support (14) selon l'attribution définie.

2. Procédé (200) selon la revendication 1, dans lequel les informations d'identification de support reçues incluent un numéro d'identification de support du premier support (10) et/ou un numéro d'identification de support du second support (14).

3. Procédé (200) selon la revendication 2, dans lequel les informations d'identification de support sont fournies par un dispositif de lecture adapté pour lire le numéro d'identification de support à partir d'un élément d'identification (20) du premier support (10) et/ou d'un élément d'identification (22) du second support (14).

4. Procédé (200) selon l'une quelconque des revendications précédentes, comprenant en outre :
- la récupération (210) d'informations de processus pour chaque ébauche de verre (18) occupant le premier support (10) ;
- la comparaison (212) des informations de processus récupérées pour chaque ébauche de verre (10) à une étape de fabrication prévue associée au second support (14) ; et
- la fourniture (214) d'un signal de notification si la comparaison détermine un défaut d'appariement entre les informations de processus récupérées pour au moins une des ébauches de verres (18) occupant le premier support (10) et l'étape de fabrication prévue associée au second support (14).

5. Procédé (200) selon la revendication 4, comprenant en outre la mise à jour (216) des informations de processus en ce qui concerne au moins la partie du premier nombre de cavités (12) du premier support (10) attribuées au nombre correspondant du second nombre de cavités (16) du second support (14).

6. Procédé (200) selon l'une quelconque des revendications précédentes, comprenant en outre :
- la récupération (218) d'informations d'identification de commande comprenant des informations concernant une ou plusieurs commandes, avec lesquelles l'une ou les plusieurs ébauches de verres (18) occupant le premier support (10) sont associées ;
- dans lequel la définition de l'attribution de l'au moins une partie du premier nombre de cavités (12) du premier support au nombre correspondant du second nombre de cavités du second support est effectuée de manière telle que toutes les ébauches de verres associées à l'une commande particulière sont attribuées au même second support.

7. Procédé (200) selon l'une quelconque des revendications précédentes, dans lequel deux ébauches de verres (18) sont associées à chacune de l'une ou des plusieurs commandes.

8. Procédé (200) selon l'une quelconque des revendications précédentes, dans lequel le premier nombre de cavités (12) du premier support (10) diffère du second nombre de cavités (16) provenant du second support (14), et
dans lequel l'attribution est définie de manière telle qu'au moins la partie du premier nombre de cavités (12) du premier support (10) est attribuée à de multiples seconds supports (14) ; ou
dans lequel l'attribution est définie de manière telle que le premier nombre de cavités de multiples premiers supports sont attribuées à au moins une partie des second cavités du second support.

9. Procédé (200) selon l'une quelconque des revendications précédentes, dans lequel le signal de commande fourni est adapté pour commander un système pour transférer de façon automatisée les multiples ébauches de verres (18) depuis l'au moins une partie du premier nombre de cavités (12) du premier support (10) au nombre correspondant du second nombre de cavités (16) du second support (14) selon l'ordre défini.

10. Procédé (200) selon l'une quelconque des revendications précédentes, dans lequel les instructions fournies comprennent un signal de données pour une interface homme-machine pour sortir une visualisation pour donner l'instruction à un opérateur humain de transférer les multiples ébauches de verres (18) selon l'ordre défini et/ou de superviser et/ou de vérifier une exactitude d'un transfert achevé des multiples ébauches de verres (18) selon l'ordre défini.

11. Procédé (200) selon la revendication 10, dans lequel la visualisation fait partie d'une interface utilisateur graphique pour donner l'instruction à un opérateur humain de transférer les multiples ébauches de verres (18) selon l'ordre défini et/ou de superviser et/ou de vérifier l'exactitude d'un transfert achevé des multiples ébauches de verres (18) selon l'attribution définie.

12. Dispositif de traitement de données, comprenant un processeur configuré pour réaliser le procédé (200) selon de quelconques des revendications précédentes.

13. Programme d'ordinateur comprenant des instructions qui, lorsque le programme est exécuté par un ordinateur, amènent l'ordinateur à effectuer le procédé (200) selon de quelconques des revendications 1 à 11.

14. Signal de données portant le programme d'ordinateur de la revendication 13.

15. Procédé (300) pour fabriquer un verre de lunettes sur la base d'une ébauche de verre de lunette (18), le procédé (300) comprenant un procédé mis en œuvre par ordinateur (200) pour fournir un ordre d'occupation pour transférer des ébauches de verres depuis un premier support (10) à un second support (14) selon l'une quelconque des revendications 1 à 11.
